**Europäisches Patentamt**

**European Patent Office**

**Office européen des brevets**

(11) Veröffentlichungsnummer: **0 088 330**
**A1**

# (12) EUROPÄISCHE PATENTANMELDUNG

(21) Anmeldenummer: 83101950.0

(51) Int. Cl.³: **A 23 B 4/14**

(22) Anmeldetag: 28.02.83

(30) Priorität: 05.03.82 AT 893/82

(71) Anmelder: **Gottfried Amann Sohn Gesellschaft m.b.H. & Co., Rheinhofstrasse 3, A-6845 Hohenems (DE)**

(43) Veröffentlichungstag der Anmeldung: 14.09.83
Patentblatt 83/37

(72) Erfinder: **Amann, Emmo, Schweizer Strasse 10, A-6845 Hohenems (AT)**

(84) Benannte Vertragsstaaten: **BE CH DE FR GB IT LI LU NL SE**

(74) Vertreter: **Hefel, Herbert, Dipl.-Ing., Egelseestrasse 65a, A-6800 Feldkirch-Tosters (AT)**

(54) Schrank zum Lagern und Nachreifen von Fleisch- und Wurstwaren.

(57) Bei einem Schrank (3) zum Lagern und Nachreifen von Fleisch- und Wurstwaren sind ein zwangsweiser Luftumlauf mit einer Luftumwälzeinrichtung (6), eine Kühleinrichtung (11), eine Heizvorrichtung (7) sowie eine Luftbefeuchtungseinrichtung (8) vorgesehen. An wenigstens einem Teil der Innenbegrenzungswände des Schrankes (3) sind vertikal verlaufende, im bodennahen Bereich ausmündende Kanäle (4, 5) vorgesehen. Die oberen Enden der Kanäle (4, 5) sind an die gemeinsame Luftumwälzeinrichtung (6) angeschlossen. In den Kanälen (4, 5) sind zumindest die Kühleinrichtung (11) und die Heizvorrichtung (7) untergebracht. Es wird durch diese Anordnung ein wirksamer, jedoch konstruktiv einfacher Luftumlauf im Schrank (3) geschaffen.

Die Erfindung bezieht sich auf einen Schrank zum Lagern
und Nachreifen von Fleisch- und Wurstwaren, wenigstens bestehend aus einem zwangsweisen Luftumlauf, einer Luftbefeuchtungseinrichtung, einer Kühl- und Heizeinrichtung.

Es ist bereits ein Lagerraum bekannt, bei welchem im Bodenbereich und im Bereich der Raumdecke in annähernd horizontaler Richtung sich erstreckende, zur Luftzufuhr und zum
Luftabzug ausgebildete Luftkanäle mit Austritts- und Einlaßöffnungen vorgesehen sind. Eine derartige Ausführung
eignet sich besonders zum Einbau in einen Raum, wobei in
diesem Lager- und Nachreiferaum eine optimale Durchströmung erreicht wird, in dem die Austritts- bzw. Einlaßöffnungen mit annähernd horizontaler Ausström- bzw. Einsaugrichtung angeordnet sind. Es ergibt sich somit ein annähernd
U-förmig verlaufender Luftstrom in den Raum.

Eine derartige Anordnung ist für relativ große Räume besonders zweckmäßig, kann jedoch bei einem Schrank zum Lagern und Nachreifen nicht angewandt werden, zumal in einem
solchen Falle die einander gegenüberliegenden Seitenbegrenzungen des Innenraumes mit relativ geringem Abstand voneinander angeordnet sind. Es ergibt sich daher auf jeden
Fall bei einer Schrankausbildung eine Strömung in annähernd
vertikaler Richtung.

Bei einem Schrank zum Lagern und Nachreifen ist es aber
von besonderer Bedeutung, daß die Luftströmung nicht zu
intensiv wird, es darf also die Geschwindigkeit der durchgeführten Luftströmung nur sehr gering bleiben. Die vorliegende Erfindung hat sich daher zur Aufgabe gestellt,
einen Schrank zum Lagern und Nachreifen von Fleisch- und
Wurstwaren zu schaffen, bei welchem diese Forderung erfüllt werden kann und bei welchem außerdem eine Möglichkeit einer einfachen Luftführung in energiesparender Weise geschaffen wird.

Erfindungsgemäß gelingt dies dadurch, daß an wenigstens einem Teil der Innenbegrenzungswände des Schrankes vertikal verlaufende, im bodennahen Bereich ausmündende Kanäle vorgesehen sind, deren obere Enden an eine gemeinsame Luftumwälzeinrichtung angeschlossen sind, wobei in den Kanälen zumindest eine Kühl- und eine Heizvorrichtung untergebracht sind.

Durch diese erfindungsgemäßen Maßnahmen wird erreicht, daß ein wirksamer, jedoch konstruktiv einfacher Luftumlauf im Schrank geschaffen wird, ohne daß die Umlaufkanäle der Außenatmosphäre ausgesetzt wären. Es kann daher in sehr einfacher Weise innerhalb des Schrankes ein für die Lagerung bzw. das Nachreifen von Fleisch- und Wurstwaren günstiges Klima geschaffen werden. Gerade zum Reifen und Trocknen von Wurstwaren, wie z. B. Salami, ist eine genaue Beobachtung des Feuchtigkeitsgehaltes und der Temperatur im Schrank notwendig, wobei eine ausreichende Luftumwälzung, jedoch mit geringer Strömungsgeschwindigkeit, notwendig ist, um alle eingesetzten Fleisch- oder Wurststücke gleichmäßig beaufschlagen zu können.

Da die Rückführung des Luftumlaufes durch entsprechende Kanäle an den Seitenbegrenzungen des Schrankinnenraumes erfolgen kann, ergibt sich nicht durch eine Reibung zwischen den beiden Luftströmungen eine Wirbelbildung und somit ist gewährleistet, daß sowohl im bodennahen Bereich des Schrankes als auch im deckennahen Bereich des Schrankes eine ausreichende, gleichmäßig auf den Schrankquerschnitt verteilte Luftströmung gegeben ist. Es ist dann natürlich auch in konstruktiv einfacher Weise möglich, innerhalb dieser Kanäle eine Aufbereitung der umlaufenden Luft vorzunehmen, und somit also Kühl- und Heizvorrichtungen vorzusehen, so daß in energiesparender Weise eine Luftkonditionierung erfolgen kann. Außerdem können natürlich diese Kanäle einen entsprechend großen Querschnitt aufweisen, so daß sowohl im Bereich der Kühl- und der Heizvorrichtung als auch im sonstigen Kanalbereich eine sehr geringe Geschwindigkeit der Luftströmung entsteht, so daß der Wärme- bzw. Kälteübergang durch die Außenwände des Schrankes sehr gering gehalten werden kann.

Weitere erfindungsgemäße Merkmale und besondere Vorteile werden in der nachstehenden Beschreibung anhand der Zeichnungen noch näher erläutert. Es zeigen: Fig. 1 einen Vertikalschnitt durch einen erfindungsgemäßen Schrank, wobei die Teile lediglich schematisch dargestellt sind; Fig. 2 eine Schrägsicht dieses Schrankes mit geöffneter Schranktür; Fig. 3 eine Vorderansicht eines weiteren Ausführungsbeispiels eines Schrankes, wobei die Tür nicht dargestellt ist.

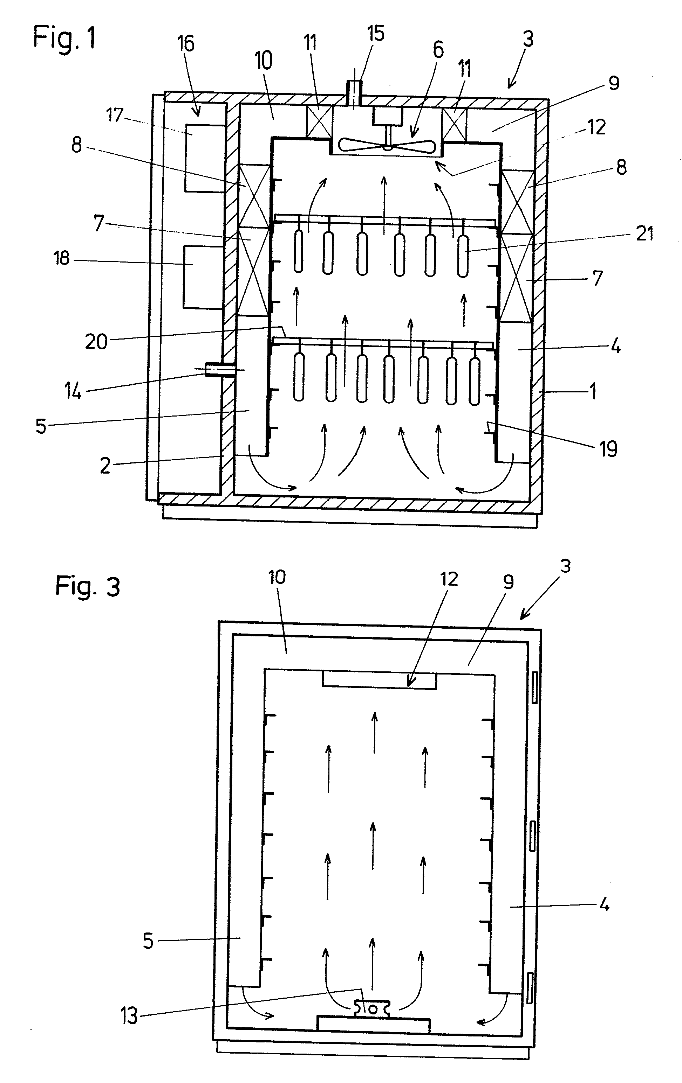

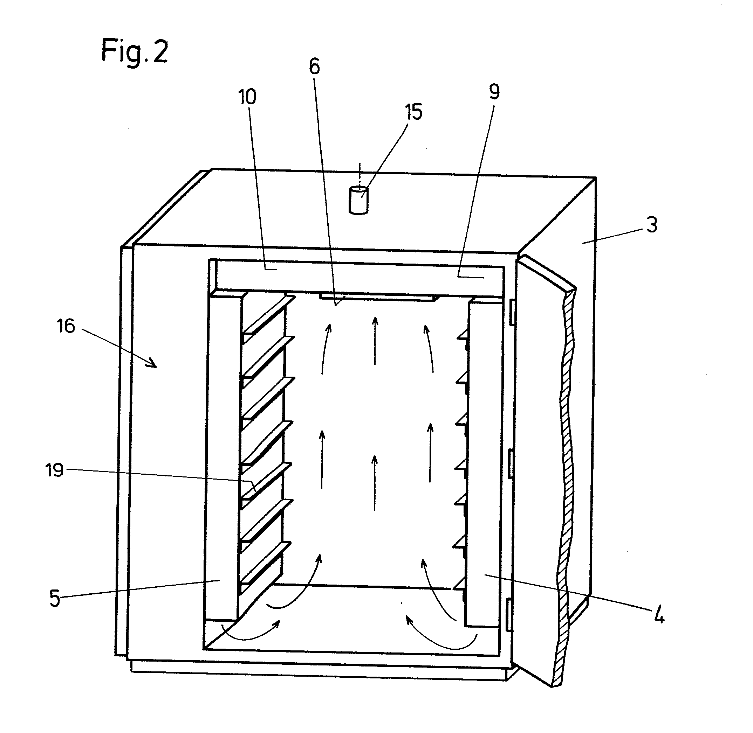

Beim Schrank nach den Fig. 1 und 2 sind im Bereich der einander gegenüberliegenden Seitenwände 1, 2 eines Schrankes 3 Kanäle 4 und 5 vorgesehen, welche an deren oberen Enden an eine gemeinsame Luftumwälzeinrichtung 6 angeschlossen sind.

In den Kanälen 4 und 5 sind Heizvorrichtungen 7 angeordnet, und ferner ist eine Befeuchtungseinrichtung 8 in jedem Kanal vorgesehen. Zur Verbindung der Kanäle 4 und 5 mit der Luftumwälzeinrichtung 6 sind deckenseitige Kanäle 9 und 10 vorgesehen, wobei in diesen deckenseitigen Kanälen 9 und 10 Kühlvorrichtungen 11 angeordnet sind. Die Luftumwälzeinrichtung 6 ist also in diese deckenseitigen Kanäle 9 und 10 eingesetzt, wobei eine zum Schrankinnenraum offene Ansaugöffnung 12 vorgesehen ist. Es ergibt sich dadurch ein Luftumlauf, welcher im Schrankinnenraum vom Boden zur Decke führt und in den Kanälen 4 und 5 in

umgekehrter Richtung. In den Kanälen 4 und 5 bzw. 9 und 10
wird die durch die Luftumwälzeinrichtung 6 angesaugte Luft
entsprechend aufbereitet, also gekühlt bzw. geheizt oder
mit entsprechender Feuchtigkeit versehen, so daß immer eine
den Erfordernissen angepaßte Luftqualität an den unteren,
offenen Enden der Kanäle 4 und 5 ausströmt. Es kann dadurch die Reifung bzw. die Nachreifung von Fleisch- und
Wurstwaren in der notwendigen Weise beeinflußt werden.

Beim gezeigten Ausführungsbeispiel ist als Luftumwälzeinrichtung 6 ein Ventilator mit vertikaler Drehachse vorgesehen. Dies bedeutet einen sehr einfachen, servicefreundlichen Aufbau. Selbstverständlich sind auch andere Luftumwälzeinrichtungen denkbar in Form von Axiallüftern, Radiallüftern oder sonstigen Luftfördereinrichtungen.

Wie insbesondere der Fig. 2 entnommen werden kann, entspricht die Breite der Kanäle 4 und 5 annähernd der Tiefe
des Schrankinnenraumes. Dadurch wird in besonderer Weise
erreicht, daß die Luftströmung innerhalb der Kanäle 4 und
5 keine große Geschwindigkeit erreicht, so daß in einfacher
Weise eine Kühlung, ein Aufheizen bzw. ein Befeuchten möglich ist. Außerdem wird erreicht, daß im Bereich des Luftaustrittes an den unteren Enden der Kanäle 4 und 5 keine
zu starke Wirbelbildung gegeben ist.

Wie schon erwähnt, ist bei der Ausgestaltung nach den Fig.
1 und 2 in den Kanälen 4 und 5 jeweils eine Befeuchtungseinrichtung 8 eingesetzt. Diese Befeuchtungseinrichtung
wird vorzugsweise auf Ultraschallbasis aufgebaut. Es ist
dadurch eine sehr feine Feuchtigkeitsverteilung gegeben
und daher auch eine sehr genaue Dosierungsmöglichkeit.

Bei der Ausgestaltung nach Fig. 3 ist eine Befeuchtungseinrichtung 13 am Bodenbereich des Schrankinnenraumes vorgesehen, also im Bereich der aus den unteren Enden der Kanäle 4 und 5 auslaufenden Strömung. Es ist also auch auf diese Weise eine ausreichende Befeuchtung der umlaufenden Luft möglich. Eine solche Ausgestaltung wird besonders bei sehr schmalen Schränken gewählt, bei welchen also die in vertikaler Richtung verlaufenden Kanäle 4 und 5 trotz großer Tiefe eine entsprechend geringe Breite aufweisen sollen.

An sich ist innerhalb des Schrankes ein geschlossener Luftumlauf vorgesehen, so daß also ein nach außen hin abgeschlossenes Klima geschaffen wird. Um nötigenfalls Frischluft zuzuführen und verbrauchte Luft abzuführen, können den Kanälen 4 und 5 verschließbare Frischluftzufuhr- und Abfuhrleitungen 14, 15 zugeordnet werden.

Bei der Ausgestaltung nach Fig. 2 ist noch gezeigt, daß an den Schrank 3 ein Schaltschrank 16 angebaut werden kann, welcher die erforderlichen Steuerelemente 17, 18 und die notwendigen Meßeinrichtungen und Schalteinrichtungen aufnimmt. Es kann dadurch ein in sich kompakter, transportfähiger Schrank geschaffen werden.

Beim gezeigten Beispiel wurde davon ausgegangen, daß die Kanäle 4 und 5 an den beiden Seitenbereichen des Schrankinnenraumes angeordnet sind. Selbstverständlich bestünde auch eine Möglichkeit, die Rückwand des Schrankes miteinzubeziehen, so daß dort gegebenenfalls zusätzlich ein solcher Kanal vorgesehen wäre, welcher möglicherweise die ganze Breite der Rückwand einnimmt. Es wäre auch denkbar, einen solchen Kanal an der Türinnenseite vorzusehen, wobei dann selbstverständlich dieser Kanal nur bei geschlossener Tür die erforderliche Wirksamkeit hat.

Die Art der Aufheizung, der Kühlung und der Luftumwälzeinrichtung hat auf die vorliegende Erfindung keinen Einfluß. Wesentlich ist lediglich dieser besondere konstruktive Aufbau mit den an den Seitenbegrenzungen des Schrankinnenraumes vorgesehenen Kanälen für die Luftumwälzung.

Aus den Zeichnungen ist noch ersichtlich, daß an den Innenbegrenzungen der Kanäle 4 und 5 z. B. Auflageleisten 19 vorgesehen werden können, an welchen Tragstangen 20 aufgesetzt werden können. Diese Tragstangen 20 dienen dann zum Aufhängen der Fleisch- und Wurstwaren 21.

.33 -02- 1 8

PATENTANWALT
Dipl.-Ing. Herbert HEFEL

- 1 -

Patentansprüche :

1. Schrank zum Lagern und Nachreifen von Fleisch- und
   Wurstwaren, wenigstens bestehend aus einem zwangsweisen Luftumlauf, einer Luftbefeuchtungseinrichtung,
   einer Kühl- und Heizeinrichtung, dadurch gekennzeichnet, daß an wenigstens einem Teil der Innenbegrenzungswände des Schrankes (3) vertikal verlaufende, im bodennahen Bereich ausmündende Kanäle (4, 5) vorgesehen
   sind, deren obere Enden an eine gemeinsame Luftumwälzeinrichtung (6) angeschlossen sind, wobei in den
   Kanälen (4, 5) zumindest eine Kühl- (11) und eine Heizvorrichtung (7) untergebracht sind.

2. Schrank nach Anspruch 1, dadurch gekennzeichnet, daß
   an den beiden einander gegenüberliegenden Seitenwänden
   Kanäle (4, 5) vorgesehen sind, wobei jedem Kanal eine
   Kühlvorrichtung und eine Heizvorrichtung zugeordnet
   sind.

3. Schrank nach den Ansprüchen 1 und 2, dadurch gekennzeichnet, daß die Kanäle (4, 5) über einen deckenseitigen Kanal (9, 10) miteinander verbunden sind,
   wobei in diesen deckenseitigen Kanal (9, 10) eine
   Luftumwälzeinrichtung (6) mit zum Schrankinnenraum
   offener Ansaugöffnung (12) vorgesehen ist.

4. Schrank nach den Ansprüchen 1 bis 3, dadurch gekennzeichnet, daß als Luftumwälzeinrichtung (6) ein Ventilator mit vertikaler Drehachse vorgesehen ist.

5. Schrank nach den Ansprüchen 1 und 2, dadurch gekennzeichnet, daß die Kühleinrichtung (11) den deckenseitigen Kanalabschnitten (9, 10) zugeordnet ist.

0088330

6. Schrank nach den Ansprüchen 1 bis 3, dadurch gekennzeichnet, daß die Breite der Kanäle (4, 5) annähernd der Tiefe des Schrankinnenraumes entspricht.

7. Schrank nach Anspruch 1 und einem der Ansprüche 2 bis 6, dadurch gekennzeichnet, daß in die Kanäle (4, 5) eine Befeuchtungseinrichtung (8) vorzugsweise auf Ultraschallbasis eingesetzt ist.

8. Schrank nach Anspruch 1 und einem der Ansprüche 2 bis 6, dadurch gekennzeichnet, daß im Bereich der aus den unteren Enden der Kanäle (4, 5) auslaufenden Strömung eine Befeuchtungseinrichtung (13) vorzugsweise auf Ultraschallbasis vorgesehen ist.

9. Schrank nach einem der vorhergehenden Ansprüche, dadurch gekennzeichnet, daß den Kanälen (4, 5, 9, 10) verschließbare Frischluftzufuhr- und Abfuhrleitungen (14, 15) zugeordnet sind.

PATENTANWALT
Dipl.-Ing. Dr. R. HEFEL

0088330

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-1 959 439 (BRÜMMENDORF)<br><br>* Seite 9, Zeile 2 - Seite 10, Zeile 5; Anspruch 1; Figur 1 *<br><br>--- | 1,2,6, 7 | A 23 B 4/14 |
| Y | US-A-3 857 254 (LOBEL)<br>* Spalte 2, Zeilen 1-12; Figur 1 *<br><br>--- | 1,3,4 | |
| A | GB-A- 479 233 (PIQUE)<br>* Seite 2, Zeilen 48-73; Figur 2 *<br><br>--- | 5,8 | |
| A | FR-A-1 119 958 (GLAUBER)<br>* Zusammenfassung a *<br><br>--- | 9 | |
| A | NL-A-6 704 479 (LINDE)<br><br>----- | | |

**RECHERCHIERTE SACHGEBIETE (Int. Cl. 3)**

A 23 B
A 23 L
A 22 C

Der vorliegende Recherchenbericht wurde für alle Patentansprüche erstellt.

| Recherchenort<br>DEN HAAG | Abschlußdatum der Recherche<br>10-06-1983 | Prüfer<br>DE LAMEILLIEURE D. |
|---|---|---|